# EUROPEAN PATENT SPECIFICATION

(11) **EP 4 403 883 B1**
(45) Date of publication and mention of the grant of the patent: **18.03.2026**
(21) Application number: 23875922.9
(22) Date of filing: 16.05.2023
(51) Int. Cl.: G01D 18/00, G01D 5/244

(54) **MAGNETIC ENCODER SELF-CALIBRATION METHOD AND MOTOR**
SELBSTKALIBRIERUNGSVERFAHREN FÜR MAGNETISCHEN CODIERER UND MOTOR
PROCÉDÉ D'AUTO-ÉTALONNAGE DE CODEUR MAGNÉTIQUE ET MOTEUR

(30) Priority: 24.10.2022 CN 202211298641
(43) Date of publication of application: 24.07.2024
(73) Proprietor: Quanzhou Ktsense Microelectronics Co., Ltd., Quanzhou, Fujian 362011 (CN)
(72) Inventor: WANG, Chao, Quanzhou, Fujian 362011 (CN); QIAN, Zhenhuang, Quanzhou, Fujian 362011 (CN); TANG, Wenjiang, Quanzhou, Fujian 362011 (CN); ZHENG, Rongchang, Quanzhou, Fujian 362011 (CN)
(74) Representative: Murgitroyd & Company
(86) International application number: PCT/CN2023/094489
(87) International publication number: WO 2024/087589

(56) References cited:
- EP-A2- 1 674 830
- CN-A- 105 492 869
- CN-A- 105 651 324
- CN-A- 106 679 710
- CN-A- 111 750 903
- CN-A- 113 514 092
- CN-A- 114 001 768
- CN-A- 115 355 937
- JP-A- 2011 196 868
- US-A1- 2016 146 638
- US-A1- 2017 322 014

## Description

This application claims priority to Chinese Patent Application No. 202211298641.0, entitled "SELF-CALIBRATION METHOD OF MAGNETIC ENCODER AND MOTOR" and filed with the China National Intellectual Property Administration on October 24, 2022, which is incorporated herein by reference in its entirety.

### TECHNICAL FIELD

This application belongs to the field of rotation angle detection, and more specifically, to a self-calibration method for a magnetic encoder, a motor, and a method for calibrating angle detection values.

### BACKGROUND

For motors, such as servo motors, that require closed-loop control of rotation angles or rotation speeds, they are typically equipped with an encoder such as magnetic encoders or optical encoders. An optical encoder generally has higher precision than a magnetic encoder, and also generally has a higher price than a magnetic encoder. In a scenario where a motor is equipped with a magnetic encoder, the magnetic encoder usually needs to be calibrated. In an existing approach, a high-precision optical encoder is added for calibration. The optical encoder and the magnetic encoder to be calibrated detect rotation angles of the same rotation shaft, and detection values of the magnetic encoder are calibrated with high-precision values output by the optical encoder.

For example, the patent document CN114001768A discloses a self-calibration apparatus for an electronic-magnetic encoder. To calibrate the detection precision of the electronic-magnetic encoder, it is necessary to add an active motor and a high-precision encoder (for example, an optical encoder) to the apparatus. Angles output by the high-precision encoder respectively corresponding to every angles output by the electronic-magnetic encoder are recorded to obtain a calibration table. The deviation of angles output by the electronic-magnetic encoder is calibrated subsequently according to the calibration table.

Active motors and high-precision encoders certainly increase hardware cost and time cost required to calibrate the magnetic encoder. That is, the calibration cost of the magnetic encoder as a whole is increased.

CN111750903A discloses a winding integrated magnetoelectric encoder. A group of winding coils and a power driving plate are integrated in the encoder, the power driving plate outputs driving voltage, induction current is generated on an induction coil, the induction current forms a rotating magnetic field, the rotating magnetic field and an encoder permanent magnet magnetic field are mutually induced to form torque, and the encoder is driven to rotate under the action of the torque; when the rotating magnetic field is at a constant speed and the amplitude of the magnetic field intensity is fixed, the angular displacement of the encoder in unit time is fixed so that the angle value can be used as a basis for calibrating and correcting the angle value of the magnetoelectric encoder, the mechanical installation deviation caused by the calibration tool is eliminated, and the precision of the magnetoelectric encoder is improved.

US20160146638A1provides an encoder which includes a memory that stores compensation values associated with the changes of state, or transitions. These stored values are used to correct a position signal when it is updated on the occurrence of a respect one of the changes of state, or transition, of the combined output signals. Using compensation values that represent an average error in the position of a change it has been found that a position signal can be produced in which the level of harmonics is greatly reduced or even completely eliminated.

EP1674830A2 describes a method for improving the quality of sinusoidal track signals in incremental machine shaft sensors. During calibration, the signal is recorded at predetermined speeds. Correction values are calculated using a linear combination of the maximum and minimum values to eliminate offset and amplitude errors in each period. These values are stored by an integrated computer.

### SUMMARY

### Technical problem

An objective of this application is to provide a self-calibration method for a magnetic encoder, in order to resolve the technical problem in the prior art that the calibration cost of a magnetic encoder is high.

### Technical solution

To achieve the foregoing objective, the technical solution used in this application is to provides a self-calibration method for a magnetic encoder, wherein the magnetic encoder is configured to detect rotational angles of a rotation shaft, and the self-calibration method for the magnetic encoder includes:
the rotation shaft being rotating at a constant speed, acquiring, by the magnetic encoder, detection values θ_{det(ij)} of the rotational angles of the rotation shaft, where i and j are both positive integers, and θ_{det(ij)} represents a j^{th} detection value in an i^{th} period;
performing a low-pass filtering process on the detection values θ_{det(ij)} to obtain a filtered values θ_{filt(ij)}, where θ_{filt(ij)} and θ_{det(ij)} are in a one-to-one correspondence;
setting m reference points θ_{ref(n)} within 360°, and selecting detection values θ_{det(ij-n)} respectively closest to each reference point θ_{ref(n)} in each period, wherein n and m are both positive integers, 1 ≤ n ≤ m, m ≥ 2, and θ_{det(ij-n)} represents a detection value closest to a reference point θ_{ref(n)} in the i^{th} period,
selecting filtered values θ_{filt(ij-n)} corresponding to θ_{det(ij-n)};
calculating trimming values θ_{cal(i-n)} = θ_{filt(ij-n)} - θ_{det(ij-n)}, where θ_{cal(i-n)} represents a trimming value of the reference point θ_{ref(n)} in the i^{th} period;
performing an averaging process on θ_{cal(i-n)} over p periods for each reference point θ_{ref(n)} to obtain target trimming values θ_{cal(n)}, where θ_{ref(n)} and θ_{cal(n)} are in a one-to-one correspondence, p is a positive integer, and p ≥ 2; and
storing each of the reference points θ_{ref(n)} and the target trimming values θ_{cal(n)} respectively corresponding to the each of the reference points in a one-to-one correspondence to obtain a trimming reference table.

Optionally, a low-pass filtering process is performed on θ_{cal(i-n)} over the p periods for each reference point θ_{ref(n)} to obtain the target trimming value θ_{cal(n)}.

Optionally, in the process of acquiring the detection values θ_{det(i)}, a rotation speed of the rotation shaft ranges from 1000 RPM to 5000 RPM.

Optionally, θ_{ref(1)} = 0, θ_{ref(n+1)} = θ_{ref(n)} + 2^{K}, and K is positive integer.

Optionally, the detection values θ_{det(ij)} and the reference points θ_{ref(n)} are both represented in binary form, the detection values θ_{det(ij)} and binary 2^{K-1} are added to obtain θ_{index(ij)}, and θ_{index(ij)} are compared with each reference point θ_{ref(n)} to find the detection values θ_{det(ij-n)} respectively closest to each reference point θ_{ref(n)}.

Optionally, K = 4, and the detection values θ_{det(ij)} and the reference points θ_{ref(n)} in binary forms both have 8 or more digits.

Optionally, after the trimming reference table is established, the magnetic encoder acquires detection values θ_{det(x)} of the rotation angles of the rotation shaft, where x is a positive integer, searches the trimming reference table according to the detection values θ_{det(x)} to obtain the corresponding target trimming values θ_{cal(n)}, and calculates a correction values θ_{cor(x)} = θ_{det(x)} + θ_{cal(n)}.

Optionally, in the self-calibration method for the magnetic encoder, data operations are implemented with a hardware description language.

This application further provides a motor. The motor is equipped with a magnetic encoder and a signal processing circuit, the magnetic encoder is fixed relative to a stator of the motor, a magnet is disposed at an output shaft of the motor, the magnetic encoder is configured to detect rotation angles of the magnet, and the signal processing circuit establishes a trimming reference table according to the self-calibration method for a magnetic encoder.

Optionally, the signal processing circuit includes a first filter, a comparison module, a storage module, a correspondence module, a subtractor, and a second filter, m reference points θ_{ref(n)} are stored in the storage module, the magnetic encoder outputs detection values θ_{det(ij)}, the detection values θ_{det(ij)} are input into the first filter to perform a low-pass filtering process to obtain filtered values θ_{filt(ij)}, the comparison module compares the detection values θ_{det(ij)} in each period with each reference point θ_{ref(n)} to find out detection value θ_{det(ij-n)} respectively closest to each reference point θ_{ref(n)} within each period, the correspondence module finds out filtered values θ_{filt(ij-n)} corresponding to θ_{det(ij-n)}, θ_{filt(ij-n)} and θ_{det(ij-n)} are input into the subtractor to perform subtraction to obtain trimming values θ_{cal(i-n)}, and θ_{cal(i-n)} over p periods are input into the second filter to perform a low-pass filtering process to obtain target trimming values θ_{cal(n)} corresponding to the reference points θ_{ref(n)}.

Optionally, the magnetic encoder is located on a side to the magnet in an axial direction of the output shaft of the motor.

This application further provides a method for calibrating angle detection values, including:
the angle detection values changing periodically, using θ_{det(ij)} to represent a j^{th} detection value in an i^{th} period, and i and j are both positive integers;
performing a low-pass filtering process on detection values θ_{det(ij)} to obtain filtered values θ_{filt(ij)}, where θ_{filt(ij)} and θ_{det(ij)} are in a one-to-one correspondence;
setting m reference points θ_{ref(n)} within 360°, and selecting detection values θ_{det(ij-n)} respectively closest to each reference point θ_{ref(n)} in each period, wherein n and m are both positive integers, 1 ≤ n ≤ m, m ≥ 2, and θ_{det(ij-n)} represents a detection value closest to a reference point θ_{ref(n)} in the i^{th} period,
wherein θ_{ref(1)} = 0, θ_{ref(n+1)} = θ_{ref(n)} + 2^{K}, K is a positive integer, the detection values θ_{det(ij)} and the reference points θ_{ref(n)} are both represented in binary form, the detection values θ_{det(ij)} and binary 2^{K-1} are added to obtain θ_{index(ij)}, and θ_{index(ij)} are compared with each reference point θ_{ref(n)} to find the detection values θ_{det(ij-n)} respectively closest to each reference point θ_{ref(n)};
selecting a filtered values θ_{filt(ij-n)} corresponding to θ_{det(ij-n)};
calculating trimming values θ_{cal(i-n)} = θ_{filt(i-n)} - θ_{det(ij-n)}, where θ_{cal(i-n)} represents trimming values of the reference point θ_{ref(n)} in the i^{th} period;
performing an averaging process on θ_{cal(i-n)} over p periods for each reference points θ_{ref(n)} to obtain target trimming values θ_{cal(n)}, wherein θ_{ref(n)} and θ_{cal(n)} are in a one-to-one correspondence, p is a positive integer, and p ≥ 2; and
storing each of the reference points θ_{ref(n)} and the target trimming values θ_{cal(n)} respectively corresponding to the eac of the reference points in a one-to-one correspondence to obtain a trimming reference table.

Optionally, each θ_{index(ij)} and each θ_{ref(n)}, which are represented in binary form, are segmented into a comparison part and a remaining part, where a digit being 1 in 2^{K} represented in binary form is a segmentation reference digit, the segmentation reference digit and digits higher than the segmentation reference digit belong to the comparison part, and digits lower than the segmentation reference digit belong to the remaining part; and
when θ_{index(ij)} is compared with one of the reference points θ_{ref(n)}, the comparison part of θ_{index(ij)} is compared with the comparison part of θ_{ref(n)}.

Optionally, a low-pass filtering process is performed on θ_{cal(i-n)} over the p periods for each reference points θ_{ref(n)} to obtain the target trimming values θ_{cal(n)}.

Optionally, K = 4, and the detection values θ_{det(ij)} and the reference point θ_{ref(n)} in binary forms both have 8 or more digits.

Optionally, in the method for calibrating the angle detection values, data operations are implemented with a hardware description language.

### Beneficial effects

Beneficial effects of the self-calibration method for a magnetic encoder provided in this application are as follows. Compared with the prior art, in the self-calibration method for a magnetic encoder provided in this application, the linearity of detection data can be improved by performing a low-pass filtering process on detection values θ_{det(ij)}. Filtered values θ_{filt(ij)} may be considered as results of performing linearity calibration on the detection values θ_{det(ij)}. θ_{cal(i-n)} represents a trimming value for a reference point θ_{ref(n)} in the i^{th} period. For each reference point, there are p corresponding trimming values over p periods. An accurate target trimming value θ_{cal(n)} can be obtained by performing an averaging process on the p trimming values. In this way, for each reference point, the target trimming value θ_{cal(n)} corresponding to the reference point can be obtained, so as to form a trimming reference table. It is unnecessary to add an expensive optical encoder as a calibration reference, so that the calibration cost of the magnetic encoder can be reduced.

### BRIEF DESCRIPTION OF THE DRAWINGS

To describe the technical solutions of the embodiments of this application more clearly, the following briefly introduces the accompanying drawings required for describing the embodiments or the prior art. Apparently, the accompanying drawings in the following description show only some embodiments of this application, and a person of ordinary skill in the art may still derive other drawings from these accompanying drawings without creative efforts.
FIG. 1 is a schematic configuration diagram of a motor and a magnetic encoder according to an embodiment of this application;
FIG. 2 is a schematic principle diagram of a self-calibration method for a magnetic encoder according to an embodiment of this application; and
FIG. 3 is a schematic principle diagram of a first filter according to an embodiment of this application.

Reference numerals in the drawings are as below.
10-motor, 11-rotation shaft, 20-magnet, 30-magnetic encoder, and 40-subtractor.

### DETAILED DESCRIPTION

To make the technical problems to be resolved, the technical solutions, and beneficial effects of this application clearer, the following further describes this application in detail with reference to the accompanying drawings and the embodiments. It should be understood that the specific embodiments described herein are merely used to explain this application but are not intended to limit this application. The scope of the invention is defined by the appended claims.

It should be noted that, when a component is expressed as "being mounted on" or "being attached to" another component, the component may be directly on the another component or indirectly on the another component. When one component is expressed as "being connected to" another component, the component may be directly connected to the another component or indirectly connected to the another component.

It should be understood that orientation or position relationships indicated by the terms such as "length", "width", "on", "below", "front", "rear", "left", "right", "vertical", "horizontal", "top", "bottom", "inside", and "outside" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as limiting this application.

In addition, terms "first" and "second" are used merely for descriptive purpose, and shall not be construed as indicating or implying relative importance or implying a quantity of indicated technical features. Therefore, a feature limited by "first" or "second" may explicitly or implicitly include one or more of the features. In the descriptions of this application, "a plurality of" means two or more, unless otherwise definitely and specifically limited.

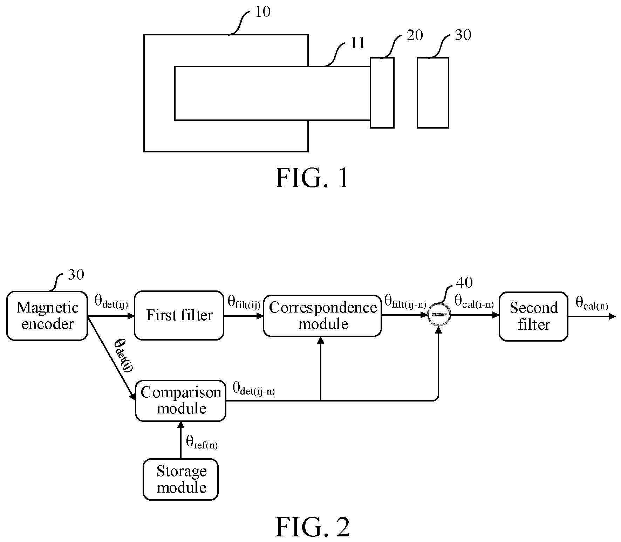

Referring to FIG. 1 and FIG. 2, a motor provided in an embodiment of this application is described. A motor is equipped with a magnetic encoder and a signal processing circuit. The position of magnetic encoder is fixed relative to a stator of the motor. A magnet is attached to an output shaft (that is, a rotation shaft) of the motor. The magnetic encoder is configured to detect the rotation angles of the magnet. The signal processing circuit establishes a trimming reference table according to the self-calibration method for the magnetic encoder.

Regarding the position of the magnetic encoder relative to the magnet, an on-shaft detection solution or an off-shaft detection solution may be adopted for the magnetic encoder provided in this application. On-shaft detection and off-shaft detection are two different ways to perform magnetic induction detection in this field.

Preferably, the on-shaft detection is used for the magnetic encoder provided in this application. The magnetic encoder is located to the side of the magnet in an axial direction of the output shaft of the motor, making it convenient to obtain high angle detection precision.

The signal processing circuit includes a first filter, a comparison module, a storage module, a correspondence module, a subtractor, and a second filter. There are m reference points θ_{ref(n)} stored in the storage module. The magnetic encoder outputs detection values θ_{det(ij)}. The detection values θ_{det(ij)} are input into the first filter to perform a low-pass filtering process to obtain filtered values θ_{filt(ij)}. The comparison module compares the detection values θ_{det(ij)} in each period with each reference point θ_{ref(n)} to find out detection values θ_{det(ij-n)} respectively closest to each reference point θ_{ref(n)} within each period. The correspondence module finds out filtered values θ_{filt(ij-n)} corresponding to θ_{det(ij-n)}. θ_{filt(ij-n)} and θ_{det(ij-n)} are input into the subtractor to subtract one from the other to obtain trimming values θ_{cal(i-n)}. θ_{cal(i-n)} over p periods are input into the second filter to perform a low-pass filtering process to obtain target trimming values θ_{cal(n)} respectively corresponding to the reference points θ_{ref(n)}. A trimming reference table can be obtained by storing the reference points θ_{ref(n)} and the target trimming values θ_{cal(n)} in a one-to-one correspondence.

The self-calibration method for a magnetic encoder provided in an embodiment of this application is described below. The self-calibration method for the magnetic encoder includes the following steps:
The rotation shaft is kept to rotate at a constant speed. Detection values θ_{det(ij)} of the rotation angles of the rotation shaft are acquired by the magnetic encoder, where i and j are both positive integers, and θ_{det(ij)} represents the j^{th} detection value in the i^{th} period;
A low-pass filtering process is performed on the detection values θ_{det(ij)} to obtain filtered values θ_{filt(ij)}, where θ_{filt(ij)} and θ_{det(ij)} are in a one-to-one correspondence;
M reference points θ_{ref(n)} are set within 360°. In each period, for each reference point θ_{ref(n)}, a detection value θ_{det(ij-n)} which is the closest to the reference point θ_{ref(n)} is selected, where n and m are both positive integers, 1 ≤ n ≤ m, m ≥ 2, and θ_{det(ij-n)} represents the detection value closest to the reference point θ_{ref(n)} in the i^{th} period;
Filtered values θ_{filt(ij-n)} corresponding to θ_{det(ij-n)} are selected;
Trimming values θ_{cal(i-n)} = θ_{filt(ij-n)} - θ_{det(ij-n)} are calculated, where θ_{cal(i-n)} represents the trimming value in the i^{th} period for the reference point θ_{ref(n)}.

An averaging process is performed on θ_{cal(i-n)} over p periods for each reference point θ_{ref(n)} to obtain target trimming values θ_{cal(n)}, where each of θ_{ref(n)} corresponds to a respective one of θ_{cal(n)} while each of θ_{cal(n)} corresponds to a respective one of θ_{ref(n)}, p is a positive integer, and p ≥ 2.

Each reference point θ_{ref(n)} and its corresponding target trimming value θ_{cal(n)} are stored in a one-to-one correspondence, so as to obtain a trimming reference table.

Beneficial effects of the self-calibration method for a magnetic encoder provided in this application are as follows. Compared with the prior art, in the self-calibration method for a magnetic encoder provided in this application, the linearity of detection data can be improved by performing a low-pass filtering process on detection values θ_{det(ij)}. Filtered values θ_{filt(ij)} may be considered as results of performing linearity correction on the detection values θ_{det(ij)}. θ_{cal(i-n)} represents a trimming value for a reference point θ_{ref(n)} in the i^{th} period. For each reference point, there are p corresponding trimming values over p periods. An accurate target trimming value θ_{cal(n)} can be obtained by performing an averaging process on the p trimming values. In this way, for each one of the reference points, a target trimming value θ_{cal(n)} corresponding to the reference point can be obtained to form a trimming reference table. It is unnecessary to add an expensive optical encoder as a calibration reference, so that the calibration cost of the magnetic encoder can be reduced.

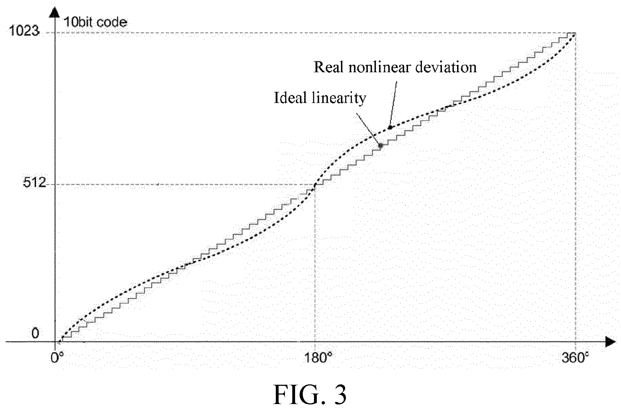

Referring to FIG. 3, a low-pass filtering process is performed on detection values θ_{det(ij)} within one period to obtain filtered values θ_{filt(ij)}. Before filtering, the detection values θ_{det(ij)} include nonlinear deviations. After the low-pass filtering process by the first filter, the nonlinear deviations can be eliminated or reduced, so that an ideal linearity can be achieved as near as possible. A low-pass filter in the existing art may be used as the first filter.

When the rotation shaft is rotating at a constant speed, detection values θ_{det(i)} acquired by the magnetic encoder is changing periodically, and the changing frequency of the detection values θ_{det(i)} is consistent with the rotation speed of the rotation shaft.

θ_{det(ij)} represents the j^{th} detection value in the i^{th} period. For example, θ_{det(23)} represents the third detection value in the second period. θ_{filt(ij)} and θ_{det(ij)} are in a one-to-one correspondence. For example, the filtered value corresponding to θ_{det(23)} is represented as θ_{filt(23)}. θ_{det(ij-n)} represents a detection value which is the closest to the reference point θ_{ref(n)} in the i^{th} period. For example, θ_{det(2j-5)} represents a detection value closest to the reference point θ_{ref(5)} in the second period. A filtered value θ_{filt(2j-5)} corresponds to θ_{det(2j-5)}. θ_{cal(i-n)} represents the trimming value for the reference point θ_{ref(n)} in the i^{th} period. For example, θ_{cal(2-5)} represents the trimming value for the reference point θ_{ref(5)} in the second period, and θ_{cal(2-5)} = θ_{filt(2j-5)} - θ_{det(2j-5)}. For the reference point θ_{ref(5)}, trimming values over p periods are respectively represented as θ_{cal(1-5)}, θ_{cal(2-5)}, ..., and θ_{cal(p-5)}. An averaging process is performed on the p trimming values to obtain a target trimming value θ_{cal(5)}, and then θ_{ref(5)} and θ_{cal(5)} may be stored in the trimming reference table in a one-to-one correspondence.

Specifically, for each reference point θ_{ref(n)}, a low-pass filtering process is performed on θ_{cal(i-n)} over p periods to obtain a target trimming value θ_{cal(n)}. That is, θ_{cal(i-n)} over p periods are input into the second filter to perform a low-pass filtering process to obtain a target trimming value θ_{cal(n)} corresponding to the reference point θ_{ref(n)}.

In the self-calibration process for the magnetic encoder, as the rotation shaft rotates at a constant speed, the nonlinear deviations included in the detection values θ_{det(i)} becomes a signal with a frequency equal to the rotation speed in value. When the rotation speed is higher, the frequency of the signal is higher. After the low-pass filtering process, the nonlinear deviations can be eliminated or reduced, so an accurate detection result is obtained. In the self-calibration process for the magnetic encoder, the rotation speed of the rotation shaft should not be excessively low in order to avoid that the rotation speed shakes intensely so that detection precision is affected. The rotation speed of the rotation shaft should also not be excessively high in order to avoid that the system clock frequency needs to be excessively high and thus the hardware cost and the calculation cost are increased.

Preferably, in the process of acquiring the detection values θ_{det(i)}, the rotation speed of the rotation shaft ranges from 1000 RPM to 5000 RPM. When the rotation speed of the rotation shaft is in this range, the rotation speed of the rotation shaft is stable, so that high detection precision can be obtained.

To make it easier for the comparison module to find the detection values θ_{det(ij-n)} closest to the reference points θ_{ref(n)}, the following rule may be set regarding the distribution of the reference points: θ_{ref(1)} = 0, θ_{ref(n+1)} = θ_{ref(n)} + 2^{K}, and K is a positive integer. The benefit of this approach is that when 2^{K} is represented in binary form, only one digit is 1, and all the other digits are 0. In this case, each reference point may be segmented into two parts based on this digit being 1, that is, into a comparison part (higher digits) and a remaining part (lower digits). The digit being 1 belongs to the comparison part. The detection value θ_{det(ij)} is also correspondingly segmented into a comparison part (higher digits) and a remaining part (lower digits). It is only necessary to compare the comparison part of the detection value θ_{det(ij)} with the comparison part of the reference point θ_{ref(n)}.

Further, both the detection values θ_{det(ij)} and the reference points θ_{ref(n)} are represented in binary form. The detection values θ_{det(ij)} and 2^{K-1} in binary form are added to obtain θ_{index(ij)}. θ_{index(ij)} are compared with each reference point θ_{ref(n)} to find the detection values θ_{det(ij-n)} respectively closest to each reference point θ_{ref(n)}. The addition of the detection values θ_{det(ij)} and binary 2^{K-1} is equivalent to "half adjust" in a decimal system. 2^{K-1} corresponds to the remaining part of a detection value θ_{det(ij)}. When the two are added, if there is no carry, the comparison part with a noisy value yₘᵢₓ remains unchanged. This is equivalent to "rounding down". If there is a carry, 1 is added to the comparison part of the detection value θ_{det(ij)}, which is equivalent to "rounding up".

Preferably, K = 4, and the detection values θ_{det(ij)} and the reference points θ_{ref(n)} in binary forms both have 8 or more digits. The binary forms of the detection values θ_{det(ij)} and that of the reference points may have 8, 12, 16, 20, 24, 28, 32, or the like digits.

Table 1 shows an example of reference points.

**Table 1**

| Reference points (decimal) | Reference points (binary) |
|---|---|
| 0 | 0000 0000 |
| 16 | 0001 0000 |
| 32 | 0010 0000 |
| 48 | 0011 0000 |
| ...... | ...... |

In the example in Table 1, 2^{K} = 16, K = 4, the binary form of the detection value θ_{det(ij)} has 8 digits, and so is the binary form of the reference points. The higher 4 digits of the detection values θ_{det(ij)} and the reference points are comparison parts, and the lower 4 digits of them are remaining parts. 2^{K-1} is represented as 00001000 in binary form. If a first detection value θ_{det(i1)} is 00010001 (17 in decimal), θ_{index(i1)} = θ_{det(i1)} + 2^{K-1} = 00010001 + 00001000 = 00011001. The closest 00010000 (16 in decimal) can be quickly found by comparing the higher 4 digits of θ_{index(i1)} with the higher 4 digits of the reference points. If a second detection value θ_{det(i2)} is 00011101 (29 in decimal), θ_{index(i2)} = θ_{det(i2)} + 2^{K-1} = 00011101 + 00001000 = 00100101. The closest 00100000 (32 in decimal) can be quickly found by comparing the higher 4 digits of θ_{index(i2)} with the higher 4 digits of the reference points.

In some embodiments, the higher 4 digits of each reference point may be used as a sequence number of the reference point. The closest reference point can be quickly found by comparing the higher 4 digits of θ_{index(ij)} with the sequence number of each reference point.

It should be noted that the units of the reference points in Table 1 are not degrees. That is, the given values indicate angles not directly in a unit of degree. To make them easier to be represented in a binary form, 2^{R} may be used to represent 360°, and R is a positive integer. For example, let R = 8, so 256 (100000000 in binary) represents 360°, 128 (10000000 in binary) represents 180°, and 16 (00010000 in binary) represents 22.5°. In this example, 8-bits-binary numbers are stored. 256 (100000000 in binary) represents 360°, and 100000000 overflows to turn into 00000000. Since 360° is identical with 0°, 00000000 may be used to represent 360° or 0° in actual practice.

After the trimming reference table is established, in an actual detection process, the magnetic encoder acquires a detection value θ_{det(x)} of the rotation angle of the rotation shaft, where x is a positive integer. The trimming reference table is searched based on the detection value θ_{det(x)} to obtain a corresponding target trimming value θ_{cal(n)}, and a correction value θ_{cor(x)} = θ_{det(x)} + θ_{cal(n)} is calculated.

Preferably, in the self-calibration method for a magnetic encoder, data operations are implemented with a hardware description language.

To achieve an excellent speed of the operations, a hardware description language is applied in an embodiment of this application, and the data operations are implemented with the hardware description language in the self-calibration method for a magnetic encoder. It may be understood that in the self-calibration method for a magnetic encoder, data operations may be implemented in other manners. Further, the hardware description language applied in this application may be a Very-High-Speed Integrated Circuit Hardware Description Language (VHDL) or may be a Verilog HDL. Compared with calculation through a microcontroller unit (MCU), the integrated circuit eventually generated by the hardware description language has a significant advantage that the speed of parallel operations is fast. As for mathematical calculation, when arbitrary numbers with many digits are multiplied or divided in an ordinary manner in an integrated circuit generated by a hardware description language, the calculation speed is relatively slow, and too many hardware resources are occupied. Therefore, in this application, complex multiplication and division are avoided as much as possible. Moreover, it should be noted that, as for operations implemented using the hardware description language, multiplying or dividing by a power of 2 are implemented by bit-shift operations. Therefore, the operation speed of multiplying or dividing by a power of 2 is also relatively fast.

The modules defined in this application may be embodied as hardware or may be embodied as software.

This application further provides a method for calibrating angle detection values, including the following steps:
the angle detection values changing periodically, using θ_{det(ij)} to represent a j^{th} detection value in an i^{th} period, and i and j are both positive integers;
performing a low-pass filtering process on detection values θ_{det(ij)} to obtain filtered values θ_{filt(ij)}, where θ_{filt(ij)} and θ_{det(ij)} are in a one-to-one correspondence;
setting m reference points θ_{ref(n)} within 360°, and selecting detection values θ_{det(ij-n)} respectively closest to each reference point θ_{ref(n)} in each period, where n and m are both positive integers, 1 ≤ n ≤ m, m ≥ 2, and θ_{det(ij-n)} represents a detection value closest to the reference point θ_{ref(n)} in the i^{th} period,
where θ_{ref(1)} = 0, θ_{ref(n+1)} = θ_{ref(n)} + 2^{K}, K is a positive integer, the detection values θ_{det(ij)} and the reference points θ_{ref(n)} are both represented in binary form, the detection values θ_{det(ij)} and binary 2^{K-1} are added to obtain θ_{index(ij)}, and θ_{index(ij)} are compared with each reference point θ_{ref(n)} to find the detection values θ_{det(ij-n)} respectively closest to each reference point θ_{ref(n)};
selecting filtered values θ_{filt(ij-n)} corresponding to θ_{det(ij-n)};
calculating trimming values θ_{cal(i-n)} = θ_{filt(ij-n)} - θ_{det(ij-n)}, where θ_{cal(i-n)} represents a trimming value of the reference point θ_{ref(n)} in the i^{th} period;
performing an averaging process on θ_{cal(i-n)} over p periods for each reference point θ_{ref(n)} to obtain target trimming values θ_{cal(n)}, where θ_{ref(n)} and θ_{cal(n)} are in a one-to-one correspondence, p is a positive integer, and p ≥ 2; and
storing each of the reference points θ_{ref(n)} and the target trimming values θ_{cal(n)} respectively corresponding to the each of the reference point in a one-to-one correspondence to obtain a trimming reference table.

In an optional embodiment, each of θ_{index(ij)} and θ_{ref(n)}, which are represented in binary form, is segmented into a comparison part and a remaining part based on a segmentation reference digit which is the digit being 1 in 2^{K} represented in binary form. The segmentation reference digit and the digits higher than the segmentation reference digit belong to the comparison part, and the digits lower than the segmentation reference digit belong to the remaining part; and
when θ_{index(ij)} is compared with one of the reference points θ_{ref(n)}, the comparison part of θ_{index(ij)} is compared with the comparison part of θ_{ref(n)}.

For example, K = 4, and 2^{K} represents 00010000. Starting from the left (the lowest digit), the fifth digit is 1. This digit is the segmentation reference digit. Higher 4 digits of θ_{det(ij)}, θ_{index(ij)}, and θ_{ref(n)} are comparison parts, and lower 4 digits of them are remaining parts. 2^{K-1} is represented as 00001000 in binary form. Referring to Table 1, if a detection value θ_{det(i1)} is 00010001 (17 in decimal), θ_{index(i1)} = θ_{det(i1)} + 2^{K-1} = 00010001 + 00001000 = 00011001. The closest 00010000 (16 in decimal) can be quickly found by comparing the higher 4 digits of θ_{index(i1)} with the higher 4 digits of the reference points.

It should be noted that the segmentation here may be virtual, and it is not necessary to perform actual segmentation operations.

The foregoing descriptions are merely preferred embodiments of this application, and are not intended to limit this application. The scope of the invention is defined by the appended claims.

## Claims

1. A self-calibration method for a magnetic encoder, wherein the magnetic encoder is configured to detect rotation angles of a rotation shaft, and the self-calibration method for the magnetic encoder comprises:
acquiring, by the magnetic encoder, detection values θ_{det(ij)} of the rotation angles of the rotation shaft, wherein the rotating shaft is rotating at a constant speed, i and j are both positive integers, and θ_{det(ij)} represents a j^{th} detection value in an i^{th} period;
performing a low-pass filtering process on the detection values θ_{det(ij)} to obtain filtered values θ_{filt(ij)}, wherein θ_{filt(ij)} and θ_{det(ij)} are in a one-to-one correspondence;
setting m reference points θ_{ref(n)} within 360°;
in each period, for each reference point θ_{ref(n)}, selecting from the detection values θ_{det(ij)} a detection value θ_{det(ij-n)} closest to the given reference point θ_{ref(n)}, wherein n and m are both positive integers, 1 ≤ n ≤ m, m ≥ 2, and θ_{det(ij-n)} represents a detection value closest to a reference point θ_{ref(n)} in the i^{th} period;
selecting filtered values θ_{filt(ij-n)} corresponding to the selected detection values θ_{det(ij-n)};
calculating trimming values θ_{cal(i-n)} = θ_{filt(ij-n)} - θ_{det(ij-n)}, wherein θ_{cal(i-n)} represents a trimming value of the reference point θ_{ref(n)} in the i^{th} period;
averaging θ_{cal(i-n)} over p periods for each reference point θ_{ref(n)} to obtain target trimming values θ_{cal(n)}, wherein θ_{ref(n)} and θ_{cal(n)} are in a one-to-one correspondence, p is a positive integer, and p ≥ 2; and
storing each of the reference points θ_{ref(n)} and the target trimming values θ_{cal(n)} respectively corresponding to the each of the reference points in a one-to-one correspondence to obtain a trimming reference table.

2. The self-calibration method for the magnetic encoder according to claim 1, wherein
performing the low-pass filtering process on θ_{cal(i-n)} over the p periods for each reference point θ_{ref(n)} to obtain the target trimming value θ_{cal(n)}.

3. The self-calibration method for the magnetic encoder according to claim 1, wherein
in the process of acquiring the detection values θ_{det(i)}, a rotation speed of the rotation shaft ranges from 1000 RPM to 5000 RPM.

4. The self-calibration method for the magnetic encoder according to claim 1, wherein
θ_{ref(1)} = 0, θ_{ref(n+1)} = θ_{ref(n)} + 2^{K}, and K is a positive integer.

5. The self-calibration method for the magnetic encoder according to claim 4, wherein
the detection values θ_{det(ij)} and the reference points θ_{ref(n)} are both represented in binary form, the detection values θ_{det(ij)} and binary 2^{K-1} are added to obtain θ_{index(ij)}, and θ_{index(ij)} are compared with each reference point θ_{ref(n)} to find the detection values θ_{det(ij-n)} respectively closest to each reference point θ_{ref(n)}.

6. The self-calibration method for the magnetic encoder according to claim 5, wherein
K = 4, and the quantity of binary digits of the detection values θ_{det(ij)} and the quantity of binary digits of the reference points θ_{ref(n)} are greater than or equal to 8.

7. The self-calibration method for the magnetic encoder according to any one of claims 1 to 6, wherein
after the trimming reference table is established, the magnetic encoder acquires detection values θ_{det(x)} of the rotation angles of the rotation shaft, wherein x is a positive integer, searches the trimming reference table according to the detection values θ_{det(x)} to obtain the corresponding target trimming values θ_{cal(n)}, and calculates correction values θ_{cor(x)} = θ_{det(x)} + θ_{cal(n)}.

8. The self-calibration method for the magnetic encoder according to any one of claims 1 to 6, wherein
in the self-calibration method for the magnetic encoder, data operations are implemented with a hardware description language.

9. A motor, wherein
the motor is equipped with a magnetic encoder and a signal processing circuit, the magnetic encoder is fixed relative to a stator of the motor, a magnet is disposed at an output shaft of the motor, the magnetic encoder is configured to detect rotation angles of the magnet, and the signal processing circuit is configured to establish a trimming reference table according to the self-calibration method for a magnetic encoder according to any one of claims 1 to 8.

10. The motor according to claim 9, wherein
the signal processing circuit comprises a first filter, a comparison module, a storage module, a correspondence module, a subtractor, and a second filter, m reference points θ_{ref(n)} are stored in the storage module, the magnetic encoder is configured to output detection values θ_{det(ij)}, the detection values θ_{det(ij)} are input into the first filter to perform a low-pass filtering process to obtain filtered values θ_{filt(ij)}, the comparison module is configured to compare the detection values θ_{det(ij)} in each period with each reference point θ_{ref(n)} to find out detection values θ_{det(ij-n)} respectively closest to each reference point θ_{ref(n)} within each period, the correspondence module is configured to find out filtered values θ_{filt(ij-n)} corresponding to θ_{det(ij-n)}, θ_{filt(ij-n)} and θ_{det(ij-n)} are input into the subtractor to perform subtraction to obtain trimming values θ_{cal(i-n)}, and θ_{cal(i-n)} over p periods are input into the second filter to perform a low-pass filtering process to obtain target trimming values θ_{cal(n)} corresponding to the reference points θ_{ref(n)}.

## Patentansprüche

1. Ein Selbstkalibrierungsverfahren für einen magnetischen Codierer, wobei der magnetische Codierer konfiguriert ist, um Drehwinkel einer Drehwelle zu detektieren, und das Selbstkalibrierungsverfahren für den magnetischen Codierer Folgendes beinhaltet:
Erfassen, durch den magnetischen Codierer, von Detektionswerten θ_{det(ij)} der Drehwinkel der Drehwelle, wobei sich die Drehwelle mit einer konstanten Geschwindigkeit dreht, i und j beide positive ganze Zahlen sind und θ_{det(ij)} einen j-ten Detektionswert in einer i-ten Periode darstellt;
Durchführen eines Tiefpassfilterprozesses an den Detektionswerten θ_{det(ij)}, um gefilterte Werte θ_{filt(ij)} zu erhalten, wobei sich θ_{filt(ij)} und θ_{det(ij)} in einer Eins-zu-Eins-Entsprechung befinden;
Festlegen von m Referenzpunkten θ_{ref(n)} innerhalb von 360°;
in jeder Periode, für jeden Referenzpunkt θ_{ref(n)}, Auswählen, aus den Detektionswerten θ_{det(ij)}, eines Detektionswerts θ_{det(ij-n)}, der dem gegebenen Referenzpunkt θ_{ref(n)} am nächsten liegt, wobei n und m beide positive ganze Zahlen sind, 1 ≤ n ≤ m, m ≥ 2 und θ_{det(ij-n)} einen Detektionswert darstellt, der einem Referenzpunkt θ_{ref(n)} in der i-ten Periode am nächsten liegt;
Auswählen gefilterter Werte θ_{filt(ij-n)}, die den ausgewählten Detektionswerten θ_{det(ij-n)} entsprechen;
Berechnen von Trimmwerten θ_{cal(i-n)} = θ_{filt(ij-n)} - θ_{det(ij-n)}, wobei θ_{cal(i-n)} einen Trimmwert des Referenzpunkts θ_{ref(n)} in der i-ten Periode darstellt;
Mitteln von θ_{cal(i-n)} über p Perioden für jeden Referenzpunkt θ_{ref(n)}, um Zieltrimmwerte θ_{cal(n)} zu erhalten, wobei sich θ_{ref(n)} und θ_{cal(n)} in einer Eins-zu-Eins-Entsprechung befinden, p eine positive ganze Zahl ist und p ≥ 2; und
Speichern jedes der Referenzpunkte θ_{ref(n)} und der Zieltrimmwerte θ_{cal(n)}, die jeweils dem jedem der Referenzpunkte entsprechen, in einer Eins-zu-Eins-Entsprechung, um eine Trimmreferenztabelle zu erhalten.

2. Selbstkalibrierungsverfahren für den magnetischen Codierer gemäß Anspruch 1, wobei Durchführen des Tiefpassfilterprozesses an θ_{cal(i-n)} über die p Perioden für jeden Referenzpunkt θ_{ref(n)}, um den Zieltrimmwert θ_{cal(n)} zu erhalten.

3. Selbstkalibrierungsverfahren für den magnetischen Codierer gemäß Anspruch 1, wobei in dem Prozess des Erfassens der Detektionswerte θ_{det(i)} eine Drehgeschwindigkeit der Drehwelle in dem Bereich von 1000 U/min bis 5000 U/min liegt.

4. Selbstkalibrierungsverfahren für den magnetischen Codierer gemäß Anspruch 1, wobei θ_{ref(1)} = 0, θ_{ref(n+1)} = θ_{ref(n)} + 2^{K} und K eine positive ganze Zahl ist.

5. Selbstkalibrierungsverfahren für den magnetischen Codierer gemäß Anspruch 4, wobei die Detektionswerte θ_{det(ij)} und die Referenzpunkte θ_{ref(n)} beide in binärer Form dargestellt werden, die Detektionswerte θ_{det(ij)} und binäre 2^{K-1} addiert werden, um θ_{index(ij)} zu erhalten, und θ_{index(ij)} mit jedem Referenzpunkt θ_{ref(n)} verglichen werden, um die Detektionswerte θ_{det(ij-n)} zu finden, die jedem Referenzpunkt θ_{ref(n)} jeweils am nächsten liegen.

6. Selbstkalibrierungsverfahren für den magnetischen Codierer gemäß Anspruch 5, wobei K = 4 und die Menge an Binärstellen der Detektionswerte θ_{det(ij)} und die Menge an Binärstellen der Referenzpunkte θ_{ref(n)} größer als oder gleich 8 sind.

7. Selbstkalibrierungsverfahren für den magnetischen Codierer gemäß einem der Ansprüche 1 bis 6, wobei
nachdem die Trimmreferenztabelle erstellt wurde, der magnetische Codierer Detektionswerte θ_{det(x)} der Drehwinkel der Drehwelle erfasst, wobei x eine positive ganze Zahl ist, die Trimmreferenztabelle gemäß den Detektionswerten θ_{det(x)} durchsucht, um die entsprechenden Zieltrimmwerte θ_{cal(n)} zu erhalten, und Korrekturwerte θ_{cor(x)} = θ_{det(x)} + θ_{cal(n)} berechnet.

8. Selbstkalibrierungsverfahren für den magnetischen Codierer gemäß einem der Ansprüche 1 bis 6, wobei
in dem Selbstkalibrierungsverfahren für den magnetischen Codierer Datenoperationen mit einer Hardwarebeschreibungssprache implementiert werden.

9. Ein Motor, wobei
der Motor mit einem magnetischen Codierer und einer Signalverarbeitungsschaltung ausgestattet ist, der magnetische Codierer relativ zu einem Stator des Motors fixiert ist, ein Magnet an einer Ausgangswelle des Motors angeordnet ist, der magnetische Codierer konfiguriert ist, um Drehwinkel des Magneten zu detektieren, und die Signalverarbeitungsschaltung konfiguriert ist, um eine Trimmreferenztabelle gemäß dem Selbstkalibrierungsverfahren für einen magnetischen Codierer gemäß einem der Ansprüche 1 bis 8 zu erstellen.

10. Motor gemäß Anspruch 9, wobei
die Signalverarbeitungsschaltung ein erstes Filter, ein Vergleichsmodul, ein Speichermodul, ein Entsprechungsmodul, einen Subtrahierer und ein zweites Filter beinhaltet, m Referenzpunkte θ_{ref(n)} in dem Speichermodul gespeichert sind, der magnetische Codierer konfiguriert ist, um Detektionswerte θ_{det(ij)} auszugeben, die Detektionswerte θ_{det(ij)} in das erste Filter eingegeben werden, um einen Tiefpassfilterprozess durchzuführen, um gefilterte Werte θ_{filt(ij)} zu erhalten, das Vergleichsmodul konfiguriert ist, um die Detektionswerte θ_{det(ij)} in jeder Periode mit jedem Referenzpunkt θ_{ref(n)} zu vergleichen, um Detektionswerte θ_{det(ij-n)} herauszufinden, die jedem Referenzpunkt θ_{ref(n)} innerhalb jeder Periode jeweils am nächsten sind, das Entsprechungsmodul konfiguriert ist, um gefilterte Werte θ_{filt(ij-n)} herauszufinden, die θ_{det(ij-n)} entsprechen, θ_{filt(ij-n)} **und** θ_{det(ij-n)} in den Subtrahierer eingegeben werden, um eine Subtraktion durchzuführen, um Trimmwerte θ_{cal(i-n)} zu erhalten, und θ_{cal(i-n)} über p Perioden in das zweite Filter eingegeben werden, um einen Tiefpassfilterprozess durchzuführen, um Zieltrimmwerte θ_{cal(n)} zu erhalten, die den Referenzpunkten θ_{ref(n)} entsprechen.

## Revendications

1. Un procédé d'auto-étalonnage pour un codeur magnétique, où le codeur magnétique est configuré pour détecter des angles de rotation d'un arbre de rotation, et le procédé d'auto-étalonnage pour le codeur magnétique comprend :
l'acquisition, par le codeur magnétique, de valeurs de détection θ_{det(ij)} des angles de rotation de l'arbre de rotation, où l'arbre en rotation tourne à une vitesse constante, i et j sont tous deux des entiers positifs, et θ_{det(ij)} représente une j^{ème} valeur de détection dans une i^{ème} période ;
l'exécution d'un processus de filtrage passe-bas sur les valeurs de détection θ_{det(ij)} pour obtenir des valeurs filtrées θ_{filt(ij)}, où θ_{filt(ij)} et θ_{det(ij)} sont dans une correspondance biunivoque ;
le réglage de m points de référence θ_{ref(n)} dans les 360° ;
dans chaque période, pour chaque point de référence θ_{ref(n)}, la sélection parmi les valeurs de détection θ_{det(ij)} d'une valeur de détection θ_{det(ij-n)} la plus proche du point de référence θ_{ref(n)} donné, où n et m sont tous deux des entiers positifs, 1 ≤ n ≤ m, m ≥ 2, et θ_{det(ij-n)} représente une valeur de détection la plus proche d'un point de référence θ_{ref(n)} dans **la** i^{ème} période ;
la sélection de valeurs filtrées θ_{filt(ij-n)} correspondant aux valeurs de détection θ_{det(ij-n)} sélectionnées ;
le calcul de valeurs d'ajustement θ_{cal(i-n)} = θ_{filt(ij-n)} - θ_{det(ij-n)}, où θ_{cal(i-n)} représente une valeur d'ajustement du point de référence θ_{ref(n)} dans **la** i^{ème} période ;
le calcul de la moyenne de θ_{cal(i-n)} sur p périodes pour chaque point de référence θ_{ref(n)} afin d'obtenir des valeurs d'ajustement cibles θ_{cal(n)}, où θ_{ref(n)} et θ_{cal(n)} sont dans une correspondance biunivoque, p est un entier positif, et p ≥ 2 ; et
le stockage de chacun des points de référence θ_{ref(n)} et des valeurs d'ajustement cibles θ_{cal(n)} correspondant respectivement aux chacun des points de référence dans une correspondance biunivoque afin d'obtenir une table de référence d'ajustement.

2. Le procédé d'auto-étalonnage pour le codeur magnétique selon la revendication 1, où l'exécution du processus de filtrage passe-bas sur θ_{cal(i-n)} sur les p périodes pour chaque point de référence θ_{ref(n)} afin d'obtenir la valeur d'ajustement cible θ_{cal(n)}.

3. Le procédé d'auto-étalonnage pour le codeur magnétique selon la revendication 1, où dans le processus d'acquisition des valeurs de détection θ_{det(i)}, une vitesse de rotation de l'arbre de rotation va de 1 000 tr/mn à 5 000 tr/mn.

4. Le procédé d'auto-étalonnage pour le codeur magnétique selon la revendication 1, où θ_{ref(1)} = 0, θ_{ref(n+1)} = θ_{ref(n)} + 2^{K}, et K est un entier positif.

5. Le procédé d'auto-étalonnage pour le codeur magnétique selon la revendication 4, où les valeurs de détection θ_{det(ij)} et les points de référence θ_{ref(n)} sont tous deux représentés sous forme binaire, les valeurs de détection θ_{det(ij)} et 2^{K-1} binaire sont ajoutées afin d'obtenir θ_{index(ij)}, et θ_{index(ij)} sont comparées à chaque point de référence θ_{ref(n)} afin de trouver les valeurs de détection θ_{det(ij-n)} respectivement les plus proches de chaque point de référence θ_{ref(n)}.

6. Le procédé d'auto-étalonnage pour le codeur magnétique selon la revendication 5, où K = 4, et la quantité de chiffres binaires des valeurs de détection θ_{det(ij)} et la quantité de chiffres binaires des points de référence θ_{ref(n)} sont supérieures ou égales à 8.

7. Le procédé d'auto-étalonnage pour le codeur magnétique selon l'une quelconque des revendications 1 à 6, où
après que la table de référence d'ajustement est établie, le codeur magnétique acquiert des valeurs de détection θ_{det(x)} des angles de rotation de l'arbre de rotation, où x est un entier positif, effectue des recherches dans la table de référence d'ajustement selon les valeurs de détection θ_{det(x)} afin d'obtenir les valeurs d'ajustement cibles θ_{cal(n)} correspondantes, et calcule des valeurs de correction θ_{cor(x)} = θ_{det(x)} + θ_{cal(n)}.

8. Le procédé d'auto-étalonnage pour le codeur magnétique selon l'une quelconque des revendications 1 à 6, où
dans le procédé d'auto-étalonnage pour le codeur magnétique, des opérations de données sont mises en œuvre avec un langage de description de matériel.

9. Un moteur, où
le moteur est équipé d'un codeur magnétique et d'un circuit de traitement de signal, le codeur magnétique est fixe par rapport à un stator du moteur, un aimant est disposé au niveau d'un arbre de sortie du moteur, le codeur magnétique est configuré pour détecter des angles de rotation de l'aimant, et le circuit de traitement de signal est configuré pour établir une table de référence d'ajustement selon le procédé d'auto-étalonnage pour un codeur magnétique selon l'une quelconque des revendications 1 à 8.

10. Le moteur selon la revendication 9, où
le circuit de traitement de signal comprend un premier filtre, un module de comparaison, un module de stockage, un module de correspondance, un soustracteur, **et un deuxième** filtre, m points de référence θ_{ref(n)} sont stockés dans le module de stockage, le codeur magnétique est configuré pour sortir des valeurs de détection θ_{det(ij)}, les valeurs de détection θ_{det(ij)} sont entrées dans le premier filtre afin d'exécuter un processus de filtrage passe-bas pour obtenir des valeurs filtrées θ_{filt(ij)}, le module de comparaison est configuré pour comparer les valeurs de détection θ_{det(ij)} dans chaque période avec chaque point de référence θ_{ref(n)} afin de trouver des valeurs de détection θ_{det(ij-n)} respectivement les plus proches de chaque point de référence θ_{ref(n)} dans chaque période, le module de correspondance est configuré pour trouver des valeurs filtrées θ_{filt(ij-n)} correspondant à θ_{det(ij-n)}, θ_{filt(ij-n)} et θ_{det(ij-n)} sont entrées dans le soustracteur afin d'exécuter une soustraction pour obtenir des valeurs d'ajustement θ_{cal(i-n)}, et θ_{cal(i-n)} sur p périodes sont entrées dans le deuxième filtre afin d'exécuter un processus de filtrage passe-bas pour obtenir des valeurs d'ajustement cibles θ_{cal(n)} correspondant aux points de référence θ_{ref(n)}.
